# EUROPEAN PATENT SPECIFICATION

(11) **EP 2 300 253 B1**
(45) Date of publication and mention of the grant of the patent: **25.10.2017**
(21) Application number: 08780269.0
(22) Date of filing: 21.07.2008
(51) Int. Cl.: B60K 6/00, B60W 20/00

(54) **ELECTRIC DRIVING MODE SELECTION FOR HYBRID VEHICLES**
WAHL EINES ELEKTRISCHEN ANTRIEBSMODUS FÜR HYBRIDFAHRZEUGE
SÉLECTION DE MODE DE COMMANDE ÉLECTRIQUE POUR VÉHICULES HYBRIDES

(43) Date of publication of application: 30.03.2011
(73) Proprietor: Bayerische Motoren Werke Aktiengesellschaft, 80809 München (DE)
(72) Inventor: VON GRUNDHERR, Johannes, 80636 München (DE); CHRIST, Thomas, 81927 München (DE); WIGERMO, Henrik, 80796 München (DE); LINS, Felix, 80801 München (DE); GOLLE, Arnd, 80993 Munich (DE)
(86) International application number: PCT/US2008/008856
(87) International publication number: WO 2010/011198

(56) References cited:
- DE-A1-102004 055 128
- DE-A1-102005 044 268
- DE-B3- 10 353 256
- US-A- 5 672 137
- US-A1- 2002 019 687
- US-A1- 2002 062 183
- US-B1- 6 201 312

## Description

The present invention pertains a method of selecting drive modes of a hybrid vehicle according to the features of claim 1 as well as a method of operating a hybrid vehicle according the features of claim 14 as well as a hybrid vehicle according to the features of claim 19.

US 2002/0062183 A describes a control system for a hybrid vehicle, wherein a threshold representing the amount of energy needed for purely electric drive is provided. If the energy needed for hybrid drive is lower than this threshold, hybrid drive is chosen. Otherwise the vehicle is propelled in electric mode. The threshold may very depending on battery charge state.

US 6 201 312 B1 describes a similar drive control system for hybrid vehicle using a threshold representing energy needed for purely electric drive. Here, the costs for charging the battery are converted to an equivalent fuel consumption which in turn is compared to the fuel consumption for running the engine.

Hybrid vehicles use electric motors alimented by one or more batteries to supplement or replace the propulsion provided by a main motor, such as an internal combustion engine. In purely electric drive mode ("e-drive"), the vehicle's propulsion is assured by the electric motor, which consumes electrical power stored in the batteries. Advantages of the purely electric drive mode include the reduction of vehicle emissions, and depending on the operational circumstances, a more energy efficient operation of the vehicle.

In hybrid drive mode, propulsion of the vehicle is assured by both the electric motors and the main motor, which typically, but not exclusively, is an internal combustion (IC) engine. By using a specifically designed transmission, the internal combustion engine and the one or more electric motors are selectively coupled to the drive wheels, so that the IC engine, the electric motor or motors, or a combination thereof propels the vehicle. The hybrid drive mode typically produces more pollutants than the purely electric drive mode, and depending on the operational circumstances, may be less energy efficient due to the fuel consumed by the IC engine. However, advantages of the hybrid drive mode include the ability to recharge the batteries, more power and torque available to the driver, and additional comfort for the passengers if certain environmental control functions are desired.

To optimize the comfort of the passengers and the efficiency of the vehicle's operation, it is necessary to determine for specific sets of operational conditions and demands, whether to operate the vehicle in a purely electric drive mode, or in a hybrid drive mode with the IC engine also operating. The decision on which drive mode is preferable can be complicated, because many parameters are of importance and may sway the selection towards purely electric mode or hybrid mode.

Some of the parameters and factors that may be considered in determining the preferred drive mode include the charge status of the batteries, the performance demanded by the driver, such as a desired drive wheel torque, the use of accessories such as the environmental control system of the vehicle, the speed of the vehicle and various efficiency losses inherent in the components of the drive train.

The selection of the drive mode should be rapid, to better harness the advantages that one drive mode or the other can provide. This requires a fast algorithm, that is simple to implement and preferably does not require the addition of extraneous components, such as sensors, that are not already available in the vehicle. The selection should also be stable, with a mechanism included in the selection algorithm that prevents switching back and forth between one drive mode and the other.

In hybrid vehicles, the purely electric drive mode is used to save fuel, since in that mode the IC engine does not operate and thus does not bum fuel. However, additional considerations are important in deciding whether it is efficient and desirable to switch to that mode For example, a first consideration is that generating the electric energy necessary to permit the purely electric operation has to require less fuel than the amount of fuel saved by the purely electric operation.

A second consideration is that the IC engine can only be switched off when demands on the vehicle can be met by the purely electric operation of the vehicle. These demands may include vehicle performance, driver and passenger comfort, etc. If purely electric mode operation cannot be conducted without violating system limits, then the IC engine cannot be turned off.

The various parameters and considerations used to evaluate whether to select the purely electric drive or the hybrid drive can vary over time, sometimes rapidly. Because of that, the evaluation may have alternating results, either in favor of the purely electric drive operation or of the IC engine operation. If the evaluation varies too often and is used directly to select the drive mode, the resulting frequent starting up and switching off of the IC engine can have an unfavorable effect on energy efficiency, durability and passenger comfort.

A very simple approach to determining the feasibility of utilizing the pure electric drive mode consists of basing the selection on the charge level of the batteries. However, this approach only determines whether e-drive is possible or not, and does not consider whether it is desirable, from an energy efficiency and from a comfort point of view.

The exemplary embodiments of the present invention provide a methodology to determine whether it is desirable to operate the vehicle in the purely electric drive mode. According to the invention, the system takes into consideration the increased efficiency of the all electric drive mode over the hybrid mode with the IC engine turned on, and compares that additional efficiency to a minimum efficiency threshold. If the threshold is surpassed, then the purely electric drive mode, or e-drive mode, is deemed to be preferable.

The present invention, in one embodiment, includes three steps that are used to determine whether the vehicle is operated in the purely electric drive mode or the hybrid drive mode. The first exemplary step generally evaluates the energy related advantage of operating the vehicle in the purely electric drive mode. The second exemplary step includes calculation of a minimum required, or demanded, energy related advantage based on operating conditions of the vehicle, which has to be met in order to select the purely electric drive mode. The third exemplary step is used for stabilization and decision, to carry out the selection of which mode is used to drive the vehicle, and to prevent switching back and forth from one mode to another too often. Stabilization plays an important role, because it prevents turning the IC engine on and off too often, which is undesirable and uncomfortable for the passengers, and is taxing on the mechanical systems.

The exemplary system for determining the preferred drive mode, according to the present invention, considers the energy related advantage of operating in the purely electric drive mode, and compares it to a minimum demanded advantage. Depending on the operating conditions of the vehicle, and on the requirements of the driver, the minimum demanded advantage may be modified to achieve certain operational goals. In general, the system according to embodiments of the invention attempts to maximize the e-driving mode, to reduce consumption, particularly in driving phases that have more savings potential. For example, a minimal desired savings potential may be specified.

As the batteries become discharged, the exemplary system according to the invention generally favors driving purely electrically only in those driving phases that have a high fuel savings potential. These may include, for example, driving in stop and go traffic, or city driving. This way, limited power from the batteries is not used as much when it does not produce significant savings, and is reserved to permit later driving in phases which offer greater savings.

As the batteries are increasingly charged, the range of conditions in which purely electric driving is selected becomes greater. For example, with fully charged batteries all driving may be purely electric. The batteries are thus kept in an optimal charge condition according to the invention.

Other objects, advantages and novel features of the present invention will become apparent from the following detailed description of the invention when considered in conjunction with the accompanying drawings.

### BRIEF DESCRIPTION OF THE DRAWINGS

The present invention is described in the following with reference to the drawings listed below. In the drawings:
Fig. 1 is a block diagram showing an exemplary embodiment of the e-drive decision system according to the invention;
Fig. 2 is a diagram showing the elements considered in an exemplary e-drive decision system according to the invention; and
Fig. 3 is an exemplary diagram used to select e-driving or hybrid driving, under various conditions, according to an embodiment of the invention.

### DETAILED DESCRIPTION OF THE DRAWINGS

The exemplary embodiments of the invention provide a system that determines whether the vehicle should be driven in purely electric drive mode, or in a hybrid mode in which the IC engine also operates. A simple and fast algorithm is provided according to the invention, to evaluate the energy related advantage of e-drive for the vehicle under given conditions.

According to the invention, the exemplary system analyzes the system losses for the purely electric drive and for the hybrid drive at a given speed, and for a given driving torque requirement, to derive an energy related advantage of the purely electric drive. A required minimum energy related advantage is determined, for example, from several variables that may depend on the conditions of the vehicle and on external conditions. These variables may be related to the charge status of the batteries, hysteresis conditions of the IC engine, etc. The energy related advantage is then compared to the required minimum energy related advantage to decide which mode is used.

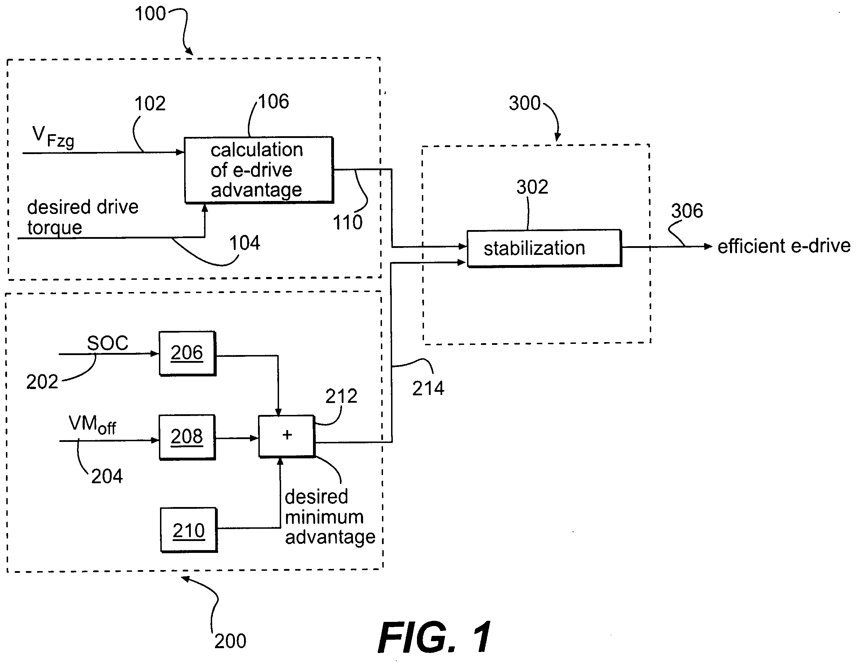

Figure 1 shows a block diagram of an exemplary e-drive determination system according to the invention. Within module 100, the energy related advantage is computed, based on a comparison of purely electric drive losses with IC engine drive losses. In module 200, the required minimum energy related advantage is calculated, while in module 300 a decision is made regarding whether to have the IC engine turned off or left running, and a stabilization step is carried out to ensure that the vehicle does not switch excessively between the drive modes.

The initial step in an exemplary embodiment of the invention takes place in module 100, where the energy-related advantage of e-driving is computed by comparing the purely electric drive operation to the hybrid mode that uses the IC engine. The inputs for this exemplary step include the vehicle speed 102, represented by VFzg, and the driver-specified drive torque demand 104, represented by Drive-Torque desired. Because the energy related advantage represents the fuel cost of moving the vehicle and generating the necessary electric energy, it can be expressed in units of liters per second (I/s). In this exemplary step, because the transmission power losses are approximately the same for e-driving and for hybrid driving, they can be ignored in the computation.

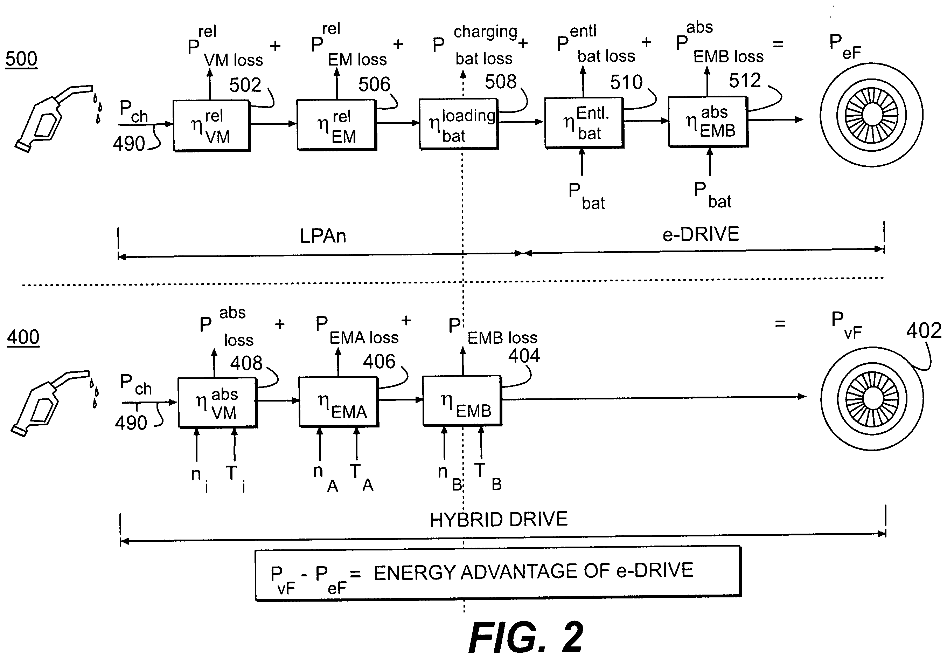

According to this embodiment, two loss chains are compared. The first loss chain is computed for the non-electric, or hybrid drive operation, which may be, for example, the IC engine operation. The second loss chain is for the e-driving operation, utilizing purely electric drive. Figure 2 shows in greater detail a diagram illustrating an example of the elements in the first and the second loss chain computation.

In the first loss chain 400, the desired power at the wheel 402 is known, since it is related to the desired driving torque 104 shown in module 100 of Fig. 1. The terms P_{eF} and P_{vF} in Fig. 2 refer to the power loss at the wheel 402 due to cumulative e-drive losses and IC drive losses, respectively. The term P_{ch} 490 refers to the desired power at the wheel 402, under various drive conditions, which is related to the amount of fuel necessary to obtain that power at a given speed 102. In one exemplary embodiment, the desired driving torque 104 may be determined by measuring the position of the accelerator pedal, or by another suitable method.

In computing the losses derived form the IC engine drive, three principal terms are considered according to this embodiment. The losses from the e-machines of the vehicle, which include the electric motor A 406 and the electric motor B 404 are determined, and are included in the power loss terms P_{EMA loss} and P_{EMB loss} shown in Fig. 2. In one example, the A and B electric motors are built into the transmission, and carry out distinct functions. For example, the A motor may be used for starting the IC engine, braking regeneration, etc., while the B motor may be used to drive the vehicle. Losses due to the electric motors may be present even during hybrid drive, with the IC engine operating. The exact value of the power loss is influenced, for example, by various operating variables which are reflected in the operational variables n and T, as they affect the electric motors with efficiency *η*_{EMA} and *η*_{EMB}.

Similarly, the absolute power loss P^{abs}ₗₒₛₛ derived from the non-electric drive motor, such as an IC engine loss 408, for example is a function of the IC engine efficiency *η*^{abs}_{VM} and of the operational variables n and T. These losses may derive, for example, from internal friction, thermodynamic inefficiency, accessories of the engine, etc. When all the power losses are computed, they are added to arrive at a total IC engine drive power loss term P_{vF}.

The e-drive losses are computed in the second loss chain 500, also shown in Fig. 2, for example as a function of the desired driving torque 104 and the vehicle speed 102. In this case, the desired power P_{ch} 490 corresponds to a different amount of fuel from that of the IC engine, because of the different losses associated with the e-drive mode. The e-drive losses derive, for example, from: 1) losses due to charging the batteries, at a prior operating point; and 2) component losses incurred from electric driving, at the current operating point.

In the exemplary embodiment shown in Fig. 2, the charging losses LPAn include P^{rel} _{VM loss}, computed in block 502 in view of the relative combustion efficiency of the IC engine, represented by *η*^{rel}_{VM}, as well as the relative losses P^{rel} _{EM loss} of the electric machine, computed in block 506 in view of the electric machine efficiency *η*^{rel}_{EM}. These efficiencies, in one exemplary embodiment, may not vary during operation and may be considered to be constant.

Another power loss occurs as a result of the chemical charging of the battery, computed in block 508 as the term P^{loading} _{BAT loss}, computed in view of the battery efficiency *η* ^{loading} _{BAT}. This power loss takes place both during charging of the battery, and also during driving under battery power of the IC engine.

The right side of the second loss chain 500 (labeled e-drive) reflects the losses that are derived from the actual e-driving of the vehicle. For example, a chemical process battery loss is determined in block 510. This loss, indicated by P^{entl} _{BAT loss}, reflects the battery losses associated with releasing the energy that was stored in the battery during charging. It is a function of the battery power generated P_{bat}, and is affected by the battery chemical efficiency *η*^{Entl}_{BAT}.

Another term computed in block 512 for the e-drive part of the loss chain is P^{abs} _{EMB loss}, that represents the absolute power losses in drive motor B. This loss is affected by the efficiency of the drive motor B, represented by *η*^{abs}_{EMB}, and by the battery power used to move the vehicle.

Once all the e-drive power losses have been determined, they are added to obtain the total e-drive power loss P_{eF}. The energy related advantage for e-drive is then determined, for example, by subtracting the total e-drive power loss P_{eF} from the total IC engine power loss P_{vF}. This term, corresponding to the energy related advantage 110 shown in Fig. 1, is then passed on to module 300 for further processing. In this exemplary embodiment, the energy related advantage is thus determined for a specific speed of the vehicle and torque desired by the driver. Those of skill in the art will understand that other methods of determining the e-drive energy related advantage can be used according to the invention.

The minimum advantage for selecting the e-drive mode is determined in module 200 as follows. The minimum advantage which has to be achieved by the purely electric drive mode, in order to reach a conclusion that the e-drive is favorable, is determined as a function of several influential variables. These influential variables may include, for example, the charge condition of the battery, a hysteresis which is calculated for a changing condition of the IC engine, starting of the e-drive operation after initial preparations to drive electrically, or other operational variables of the vehicle. These operational variables are generally related to the status and condition of the hybrid drive components.

Exemplary operational variables are shown schematically in module 200 as the characteristic curve 206 used to evaluate the conditional variables represented by SOC 202, and the hysteresis 208 which is affected by the change of IC engine condition represented by the VM off variable 204. The effect of starting to use e-drive is represented by element 210 in the diagram. All these variables are added in element 212 of the exemplary module 200 to arrive to the required minimum energy related advantage 214, which is passed on to module 300.

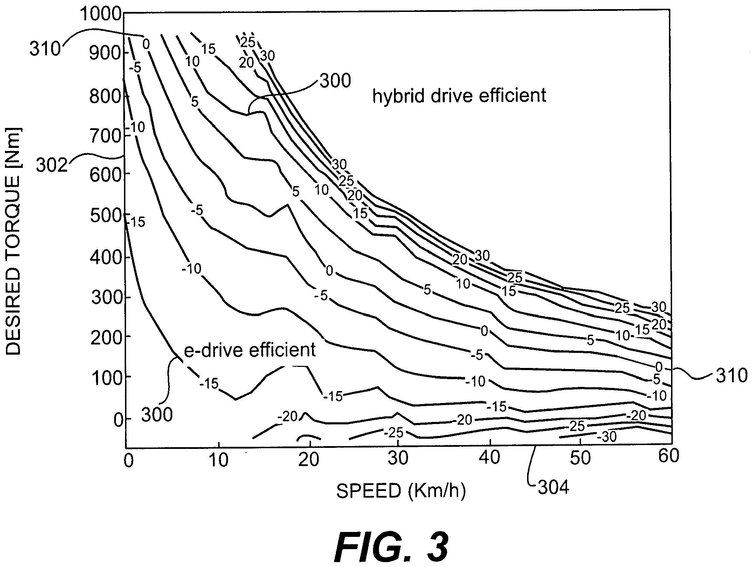

In module 300 the determination is made whether to operate the vehicle in purely electric drive mode. In one exemplary embodiment, the diagram shown in Fig. 3 may be used in making the determination. The diagram shows lines 300 of constant energy related advantage of the e-drive, as determined in module 100 described above. These lines are plotted as a function of desired torque (variable 104), on the vertical axis 302, and vehicle speed (variable 102), on the horizontal axis 304.

In one exemplary case, the line showing a difference equal to 0 represents the break even point 310. Above that line, hybrid drive using the IC engine is more energy efficient, while below the line e-drive is more energy efficient. Figure 3 represents the output of the computations carried out in block 100. Depending on factors such as battery charge level, this output is compared to different values of the minimum required advantage of the e-drive. In one exemplary embodiment, a battery charge level of about 30-40% defines a threshold at which a higher minimum desired advantage of the e-drive is required to initiate the change over.

By following the scheme described above, it is possible to globally maximize the efficiency of e-driving, by maintaining a high charge of the battery available for conditions when e-driving is very beneficial, and using the IC engine to recharge the batteries when the conditions are such that e-driving would provide a lesser benefit in efficiency. The batteries are thus kept optimally charged to take maximum advantage of e-diving when it saves the most fuel.

Element 302 of the module 300 may be used for stabilization, to prevent excessive switching back and forth between the two drive modes. For example, a wait period may be specified before switching to a different mode, in case the mode determined by the system rapidly switches back to a previously selected mode. According to the invention, an extent of change of the difference between the energy related advantage and the required minimum energy related advantage may be computed, and the switch form one drive mode to another may not be commanded unless that change of the difference exceeds a selected value.

In another example, the condition of the IC engine is not changed from on to off, and vice versa, every time there is a change in the sign of the result of subtracting the demanded energy related minimum advantage (computed in module 200) from the energy related advantage (computed in module 100). Instead, at each time step, the difference is added to a cumulative value, thus integrating the energy efficiency advantage. According to the invention, in this example the energy efficiency advantage (which may also be referred to as the power advantage) is integrated. The change to the e-drive mode of the vehicle is made when the integrated energy efficiency advantage exceeds a defined upper limit. Conversely, a switch away from the e-drive mode is carried out when the integrated value is below a defined lower limit.

The foregoing disclosure has been set forth merely to illustrate the invention and is not intended to be limiting. Since modifications of the disclosed embodiments may occur to persons skilled in the art, the invention should be construed to include everything within the scope of the appended claims.

## Claims

1. A method of selecting drive modes (vF, eF) of a hybrid vehicle, comprising the acts of:
determining an energy efficiency of purely electric drive mode (eF);
determining an energy efficiency of a hybrid drive mode (vF) ;
computing an energy related advantage (110) of the purely electric drive from the determined energy efficiencies;
computing a required minimum energy related advantage (214) based on operational parameters (206, 208, 210) of the hybrid vehicle;
comparing the energy related advantage (110) to the required minimum energy related advantage (214); and
when results of the comparison are within selected limits, selecting (300) purely electric drive of the hybrid vehicle.

2. The method according to claim 1, further comprising determining an energy efficiency of the purely electric drive mode (eF) as a function of vehicle speed (102) and desired driving torque (104).

3. The method according to claim 1, further comprising determining an energy efficiency of the hybrid drive mode (vF) as a function of vehicle speed (102) and desired driving torque (104).

4. The method according to claim 1, further comprising determining an energy efficiency of the purely electric drive mode (eF) by adding power losses (P^{entl}_{bat loss}, P^{abs}_{EMB loss})) associated with the purely electric drive (e-drive) and power losses (P^{rel}_{VM}, P^{rel}_{EM}, P^{loading}_{bat}) associated with recharging batteries.

5. The method according to claim 4, further comprising adding power losses of at least selected ones of relative losses of an internal combustion engine (P^{rel}_{VM}), of electrical machines (P^{rel}_{EM}), of battery chemical charging (P^{loading}_{bat}), of battery power delivery losses (P^{entl}_{bat loss}) and of electric drive motor losses (P^{abs}_{EMB loss}).

6. The method according to claim 1, further comprising determining an energy efficiency of the hybrid drive mode (vF) by adding power losses from at least selected ones of absolute losses of an internal combustion engine (P^{abs}ₗₒₛₛ), and of electric drive motors (P^{EMA}ₗₒₛₛ, P^{EMB}ₗₒₛₛ).

7. The method according to claim 1, further comprising adjusting the required minimum energy related advantage (214) based on a charge level of batteries of the hybrid vehicle, to favor the purely electric drive in selected conditions.

8. The method according to claim 1, further comprising determining the required minimum energy related advantage (214) based at least in part as a function of a charge condition of the batteries, an hysteresis of a condition change of an internal combustion engine (IC), and on initiation of purely electric drive.

9. The method according to claim 1, further comprising subtracting the required minimum energy related advantage (214) from the energy related advantage (110) at an operating point of selected vehicle speed (102) and desired torque (104), and comparing the resulting values to defined limits.

10. The method according to claim 9, wherein the defined limits are modified to favor purely electric driving, below a selected charge level of the batteries, only when the operating point provides an energy savings potential above a desired saving.

11. The method according to claim 1, further comprising a stabilization step (302) before selecting (300) the purely electric drive, to avoid frequent switch over from one
drive mode to another.

12. The method according to claim 11, further comprising computing an integrated energy efficiency advantage based on the energy related advantage (110) and the required minimum energy related advantage (214).

13. The method according to claim 12, wherein the switch over is only selected when the integrated energy efficiency advantage exceeds a defined limit.

14. A method of operating a hybrid vehicle, comprising the acts of:
determining an energy related advantage (110) of a purely electric drive mode (eF) over a hybrid drive mode (vF) of the hybrid vehicle, at a specified vehicle speed (102) and desired torque (104);
determining a minimum demanded energy related advantage of the purely electric drive mode (eF) based on operational parameters of the hybrid vehicle;
and
selecting (300) the purely electric drive mode (eF) when the energy related advantage (110) is greater than the minimum demanded energy related advantage.

15. The method according to claim 14, further comprising selecting (300) the purely electric drive mode (eF) at least in part based on acharge state of the vehicle's battery.

16. The method according to claim 15, further comprising additionally favoring the purely electric drive mode (eF) when the battery is highly charged.

17. The method according to claim 14, further comprising stabilizing the drive mode selection to prevent excessive switching between the drive modes.

18. The method according to claim 17, further cümprising preventing switching between the drive modes unless an extent of change of differences between the energy related advantage (110) and the minimum demanded energy related advantage exceeds a selected value.

19. A hybrid vehicle, comprising:
an electric drive motor (A, B);
an internal combustion engine;
a controller (300) adapted for selecting one of a purely electric drive mode using only the electric drive motor (A, B) and a hybrid drive mode (vF) using the electric drive motor (A, B) and the internal combustion engine (IC), and
a memory containing instructions executable by the controller for determining an energy related advantage (110) of the purely electric drive mode (eF) over the hybrid drive mode (vF) based on operational parameters (206, 208, 210) of the hybrid vehicle,
determining a minimum demanded energy related advantage of the purely electric drive mode (eF), and turning on and off the internal combustion engine as a result of comparing the energy related advantage (110) to the minimum demanded energy related advantage.

20. The hybrid vehicle according to claim 19, wherein the instructions comprise selecting (300) the purely electric drive mode (eF) when the energy related advantage (110) of the purely electric drive mode (eF) is greater than the minimum demanded energy related advantage (214).

21. The hybrid vehicle according to claim 19, wherein the instructions comprise computing the energy related advantage (110) of the purely electric drive mode (eF) by comparing an energy efficiency associated with the electric drive motor (A, B) to that associated with the internal combustion engine (IC).

22. The hybrid vehicle according to claim 19, further comprising instructions favoring turning off the internal combustion engine (IC) when a battery of the hybrid vehicle is substantially charged.

## Patentansprüche

1. Verfahren zum Auswählen von Antriebsmodi (vF, eF) eines Hybridfahrzeugs, das die folgenden Vorgänge umfasst:
Bestimmen einer Energieeffizienz eines rein elektrischen Antriebsmodus (eF);
Bestimmen einer Energieeffizienz eines hybriden Antriebsmodus (vF);
Berechnen eines energiebezogenen Vorteils (110) des rein elektrischen Antriebs aus den bestimmten Energieeffizienzen;
Berechnen eines benötigten minimalen energiebezogenen Vorteils (214) basierend auf Betriebsparametern (206, 208, 210) des Hybridfahrzeugs;
Vergleichen des energiebezogenen Vorteils (110) mit dem benötigten minimalen energiebezogenen Vorteil (214);
und
wenn Ergebnisse des Vergleichs innerhalb ausgewählter Grenzen liegen, Auswählen (300) des rein elektrischen Antriebs des Hybridfahrzeugs.

2. Verfahren nach Anspruch 1, das ferner Bestimmen einer Energieeffizienz des rein elektrischen Antriebsmodus (eF) als eine Funktion einer Fahrzeuggeschwindigkeit (102) und eines gewünschten Antriebsdrehmoments (104) umfasst.

3. Verfahren nach Anspruch 1, das ferner Bestimmen einer Energieeffizienz des hybriden Antriebsmodus (vF) als eine Funktion einer Fahrzeuggeschwindigkeit (102) und des gewünschten Antriebsdrehmoments (104) umfasst.

4. Verfahren nach Anspruch 1, das ferner Bestimmen einer Energieeffizienz des rein elektrischen Antriebsmodus (eF) durch Addieren von Leistungsverlusten (P^{entl}_{bat loss}, P^{abs}_{EMB loss}), die mit dem rein elektrischen Antrieb (e-Antrieb) verknüpft sind, und von Leistungsverlusten (P^{rel}_{VM}, P^{rel}_{EM}, P^{loading}_{bat}) die mit dem Wiederaufladen von Batterien verbunden sind, umfasst.

5. Verfahren nach Anspruch 4, das ferner Addieren von Leistungsverlusten von wenigstens ausgewählten von relativen Verlusten von einem Verbrennungsmotor (P^{rel}_{VM}), von elektrischen Maschinen (P^{rel}_{EM}), von einem chemischen Batterieaufladen (P^{loading}_{bat}), von Batterieleistungsübertragungsverlusten (P^{entl}_{bat loss}) und von Elektroantriebsmotorverlusten (P^{abs}_{EMB loss}) umfasst.

6. Verfahren nach Anspruch 1, das ferner Bestimmen einer Energieeffizienz des hybriden Antriebsmodus (vF) durch Addieren von Leistungsverlusten von wenigstens ausgewählten von absoluten Verlusten von einem Verbrennungsmotor (P^{abs}ₗₒₛₛ) und von Elektroantriebsmotoren (P^{EMA}ₗₒₛₛ, P^{EMB}ₗₒₛₛ) umfasst.

7. Verfahren nach Anspruch 1, das ferner Anpassen des benötigten minimalen energiebezogenen Vorteils (214) basierend auf einem Ladungsniveau von Batterien des Hybridfahrzeugs umfasst, um den rein elektrischen Antrieb bei ausgewählten Bedingungen zu bevorzugen.

8. Verfahren nach Anspruch 1, das ferner Bestimmen des benötigten minimalen energiebezogenen Vorteils (214) basierend auf wenigstens teilweise einer Funktion eines Ladungszustands der Batterien, einer Hysterese einer Zustandsänderung eines Verbrennungsmotors (IC: Internal Combustion engine) und auf einer Initiierung des rein elektrischen Antriebs umfasst.

9. Verfahren nach Anspruch 1, das ferner Subtrahieren des benötigten minimalen energiebezogenen Vorteils (214) von dem energiebezogenen Vorteil (110) bei einem Arbeitspunkt einer ausgewählten Fahrzeuggeschwindigkeit (102) und einem gewünschten Drehmoment (104) und Vergleichen der Ergebniswerte mit definierten Grenzen umfasst.

10. Verfahren nach Anspruch 9, wobei die definierten Grenzen unterhalb eines ausgewählten Ladungsniveaus der Batterien nur modifiziert werden, um rein elektrisches Fahren zu bevorzugen, wenn der Arbeitspunkt ein Energieeinsparungspotential oberhalb einer gewünschten Einsparung bereitstellt.

11. Verfahren nach Anspruch 1, das ferner einen Stabilisierungsschritt (302) vor dem Auswählen (300) des rein elektrischen Antriebs umfasst, um ein häufiges Umschalten von einem Antriebsmodus zu einem anderen zu vermeiden.

12. Verfahren nach Anspruch 11, das ferner Berechnen eines integrierten Energieeffizienzvorteils basierend auf dem energiebezogenen Vorteil (110) und dem benötigten minimalen energiebezogenen Vorteil (214) umfasst.

13. Verfahren nach Anspruch 12, wobei das Umschalten nur ausgewählt wird, wenn der integrierte Energieeffizienzvorteil eine definierte Grenze überschreitet.

14. Verfahren zum Betreiben eines Hybridfahrzeugs, das die folgenden Vorgänge umfasst:
Bestimmen eines energiebezogenen Vorteils (110) eines rein elektrischen Antriebsmodus (eF) gegenüber einem hybriden Antriebsmodus (vF) des Hybridfahrzeugs bei einer spezifizierten Fahrzeuggeschwindigkeit (102) und einem gewünschten Drehmoment (104);
Bestimmen eines minimalen geforderten energiebezogenen Vorteils des rein elektrischen Antriebsmodus (eF) basierend auf Betriebsparametern des Hybridfahrzeugs; und
Auswählen (300) des rein elektrischen Antriebsmodus (eF), wenn der energiebezogene Vorteil (110) größer als der minimale geforderte energiebezogene Vorteil ist.

15. Verfahren nach Anspruch 14, das ferner Auswählen (300) des rein elektrischen Antriebsmodus (eF) wenigstens teilweise basierend auf einem Ladungszustand der Fahrzeugbatterie umfasst.

16. Verfahren nach Anspruch 15, das zusätzliches Bevorzugen des rein elektrischen Antriebsmodus (eF), wenn die Batterie weit aufgeladen ist, umfasst.

17. Verfahren nach Anspruch 14, das ferner Stabilisieren der Antriebsmodusauswahl, um übermäßiges Wechseln zwischen den Antriebsmodi zu verhindern, umfasst.

18. Verfahren nach Anspruch 17, das ferner Verhindern von Wechseln zwischen den Antriebsmodi, außer ein Änderungsausmaß von Differenzen zwischen dem energiebezogenen Vorteil (110) und dem minimalen geforderten energiebezogenen Vorteil überschreitet einen ausgewählten Wert, umfasst.

19. Hybridfahrzeug, das Folgendes umfasst:
einen Elektroantriebsmotor (A, B);
einen Verbrennungsmotor;
eine Steuerung (300), die dazu ausgelegt ist, entweder einen rein elektrischen Antriebsmodus unter Verwendung nur des Elektroantriebsmotors (A, B) oder einen hybriden Antriebsmodus (vF) unter Verwendung des Elektroantriebsmotors (A, B) und des Verbrennungsmotors (IC) auszuwählen, und
einen Speicher, der Anweisungen, die durch die Steuerung ausführbar sind, für Folgendes enthält: Bestimmen eines energiebezogenen Vorteils (110) des rein elektrischen Antriebsmodus (eF) gegenüber dem hybriden Antriebsmodus (vF) basierend auf Betriebsparametern (206, 208, 210) des Hybridfahrzeugs, Bestimmen eines minimalen geforderten energiebezogenen Vorteils des rein elektrischen Antriebsmodus (eF) und Einschalten und Ausschalten des Verbrennungsmotors als ein Ergebnis eines Vergleichs des energiebezogenen Vorteils (110) mit dem minimalen geforderten energiebezogenen Vorteil.

20. Hybridfahrzeug nach Anspruch 19, wobei die Anweisungen Auswählen (300) des rein elektrischen Antriebsmodus (eF), wenn der energiebezogene Vorteil (110) des rein elektrischen Antriebsmodus (eF) größer als der minimale geforderte energiebezogene Vorteil (214) ist, umfassen.

21. Hybridfahrzeug nach Anspruch 19, wobei die Anweisungen Berechnen des energiebezogenen Vorteils (110) des rein elektrischen Antriebsmodus (eF) durch Vergleichen einer Energieeffizienz, die mit dem Elektroantriebsmotor (A, B) verknüpft ist, mit derjenigen, die mit dem Verbrennungsmotor (IC) verknüpft ist, umfassen.

22. Hybridfahrzeug nach Anspruch 19, das ferner Anweisungen umfasst, die Abschalten des Verbrennungsmotors (IC) bevorzugen, wenn eine Batterie des Hybridfahrzeugs im Wesentlichen aufgeladen ist.

## Revendications

1. Procédé de sélection de modes d'entraînement (vF, eF) d'un véhicule hybride consistant à :
- déterminer le rendement énergétique d'un mode d'entraînement électrique seul (eF),
- déterminer le rendement énergétique d'un mode d'entraînement hybride (vF),
- calculer l'avantage énergétique (110) de l'entraînement électrique seul à partir des rendements énergétiques déterminés,
- calculer un avantage minimum requis (214) lié à l'énergie en se fondant sur des paramètres opérationnels (206, 208, 210) du véhicule hybride,
- comparer l'avantage énergétique (110) par rapport à l'avantage énergétique minimum requis (214), et
- si le résultat de la comparaison se situe dans des limites fixées, choisir (300) l'entraînement électrique seul pour le véhicule hybride.

2. Procédé selon la revendication 1, comprenant en outre l'opération consistant à déterminer un rendement énergétique du mode d'entraînement électrique seul (eF) en fonction de la vitesse du véhicule (102) ou du couple moteur souhaité (104).

3. Procédé selon la revendication 1, comprenant en outre l'opération consistant à déterminer le rendement énergétique du mode d'entraînement hybride (vF) en fonction de la vitesse du véhicule (102) et du couple moteur souhaité (104).

4. Procédé selon la revendication 1, comprenant en outre l'opération consistant à :
- déterminer le rendement énergétique du mode d'entraînement électrique seul (eF) en additionnant les pertes de puissance (P^{entl}_{bat loss}, P^{abs}_{EMB loss}) associées à l'entraînement électrique seul (entraînement e) et les pertes de puissance (P^{rel}_{VM},P^{rel}_{EM}, P^{loading}_{bat}) associées à la recharge des batteries.

5. Procédé selon la revendication 4, consistant en outre à additionner les pertes de puissance d'au moins une perte choisie parmi des pertes relatives du moteur à combustion interne (P^{rel}_{VM}), de machines électriques (P^{rel}_{EM}), de la charge de batterie chimique (P^{loading}_{bat}), des pertes de distribution de puissance pour la batterie (P^{end}_{bat loss}) et des pertes moteur de l'entraînement électrique (P^{abs}_{EMB loss}).

6. Procédé selon la revendication 1, consistant en outre à déterminer un rendement énergétique du mode d'entraînement hybride (vF) en additionnant les pertes de puissance d'au moins une perte choisie parmi les pertes absolues du moteur à combustion interne (P^{abs}ₗₒₛₛ) et des moteurs d'entrainements électriques (P^{EMA}ₗₒₛₛ, P^{EMB}ₗₒₛₛ).

7. Procédé selon la revendication 1, consistant en outre à régler l'avantage énergétique minimum (214) en se fondant sur le niveau de charge des batteries du véhicule hybride pour favoriser l'entraînement électrique seul dans des conditions choisies.

8. Procédé selon la revendication 1, consistant en outre à déterminer l'avantage énergétique minimum (214) fondé au moins en partie comme fonction d'une condition de charge des batteries, de l'hystérésis de la condition de changement du moteur à combustion interne (IC) ou sur l'initialisation de l'entraînement électrique seul.

9. Procédé selon la revendication 1, consistant en outre à soustraire l'avantage énergétique minimum (214) de l'avantage énergétique (110) en un point de fonctionnement de vitesse choisie du véhicule (102) et du couple voulu (104) et comparer les valeurs résistantes à des limites définies.

10. Procédé selon la revendication 9, selon lequel on modifie les limites définies pour favoriser l'entraînement électrique seul en dessous d'un niveau de charge choisi des batteries, seulement si le point de fonctionnement donne un potentiel d'économie d'énergie supérieur à l'économique souhaitée.

11. Procédé selon la revendication 1, comprenant en outre une étape de stabilisation (302) avant de sélectionner (300) l'entraînement électrique seul pour éviter une commutation fréquente d'un mode d'entraînement à l'autre.

12. Procédé selon la revendication 11, comprenant en outre le calcul d'un avantage énergétique intégré, efficace, fondé sur l'avantage énergétique (110) et sur l'avantage énergétique minimum requis (214).

13. Procédé selon la revendication 12, selon lequel on choisit seulement la commutation si l'avantage du rendement énergétique intégré dépasse une limite définie.

14. Procédé de gestion d'un véhicule hybride consistant à :
- déterminer l'avantage énergétique (110) du mode d'entraînement électrique seul (eF) par rapport au mode d'entraînement hybride (vF) du véhicule hybride pour une vitesse donnée (102) du véhicule et un couple déterminé (104),
- déterminer l'avantage énergétique minimum demandé pour le mode d'entraînement électrique seul (eF) en se fondant sur les paramètres de fonctionnement du véhicule hybride, et
- sélectionner (300) le mode d'entraînement électrique seul (eF) si l'avantage énergétique (110) est supérieur à l'avantage énergétique minimum demandé.

15. Procédé selon la revendication 14,
**caractérisé en ce qu'**il comprend en outre la sélection (300) du mode d'entraînement électrique seul (eF) au moins en partie en se fondant sur l'état de charge de la batterie du véhicule.

16. Procédé selon la revendication 15, comprenant en outre le fait de favoriser en plus le mode d'entraînement électrique seul (eF) si la batterie est très chargée.

17. Procédé selon la revendication 14, comprenant en outre la stabilisation de la sélection du mode d'entraînement pour éviter une commutation excessive entre les modes d'entraînement.

18. Procédé selon la revendication 17, consistant en outre à éviter la commutation entre les modes d'entraînement sauf en cas de changement étendu des différences entre l'avantage énergétique (110) et l'avantage énergétique minimum demandé dépassant une valeur choisie.

19. Véhicule hybride comprenant :
- un moteur d'entraînement électrique (A, B),
- un moteur à combustion interne,
- une commande (300) pour choisir l'un des modes, à savoir le mode d'entraînement électrique seul en utilisant le moteur électrique d'entraînement (A, B) et le mode d'entraînement hybride (vF) utilisant le moteur d'entraînement électrique (A, B) et le moteur à combustion interne (IC) ainsi qu'une mémoire contenant les instructions que peut exécuter l'organe de commande pour déterminer l'avantage énergétique (110) du mode d'entraînement électrique seul (eF) par rapport au mode d'entraînement hybride (vF) en se fondant sur des paramètres opérationnels (206, 208, 210) du véhicule hybride, et
- déterminer l'avantage énergétique minimum demandé du mode d'entraînement électrique seul (eF) et mettre en marche ou couper le moteur à combustion interne comme résultat de la comparaison de l'avantage énergétique (110) par rapport à l'avantage énergétique minimum demandé.

20. Véhicule hybride selon la revendication 19, dans lequel les instructions comprennent la sélection (300) du mode d'entraînement électrique seul (eF) si l'avantage énergétique (110) du mode d'entraînement électrique seul (eF) est supérieur à l'avantage énergétique minimum demandé (214).

21. Véhicule hybride selon la revendication 19, dans lequel les instructions consistent à calculer l'avantage énergétique (110) du mode d'entraînement électrique seul (eF) en comparant l'efficacité énergétique associée au moteur d'entraînement électrique (A, B) par rapport à l'avantage associé au moteur à combustion interne (IC).

22. Véhicule hybride selon la revendication 19, comprenant en outre des instructions favorisant la coupure du moteur à combustion interne (IC) lorsque la batterie du véhicule hybride est pratiquement chargée.
